# EUROPEAN PATENT SPECIFICATION

(11) **EP 3 226 156 B1**
(45) Date of publication and mention of the grant of the patent: **04.09.2019**
(21) Application number: 17154919.9
(22) Date of filing: 07.02.2017
(51) Int. Cl.: G06F 16/25

(54) **A SYSTEM AND A METHOD TO PROVIDE VISITOR INFORMATION ABOUT VISITOR REQUESTS TO A DATASET OF LINKED RDF DATA**
SYSTEM UND VERFAHREN ZUR BEREITSTELLUNG VON BESUCHERINFORMATIONEN ZU BESUCHERANFRAGEN AN EINEN DATENSATZ VON VERKNÜPFTEN RDF-DATEN
SYSTÈME ET PROCÉDÉ DE FOURNITURE D'INFORMATIONS AUX VISITEURS SUR LEURS DEMANDES RELATIVES À UN ENSEMBLE DE DONNÉES RDF LIÉES

(30) Priority: 30.03.2016 GB 201605370; 30.03.2016 DE 102016205253
(43) Date of publication of application: 04.10.2017
(73) Proprietor: FUJITSU LIMITED, Kawasaki-shi Kanagawa 211-8588 (JP)
(72) Inventor: Costabello, Luca, Co. Galway (IE); Vandenbussche, Pierre-Yves, Co. Galway (IE); Shukair, Gofran, Dublin 8 (IE)
(74) Representative: Haseltine Lake Kempner LLP

(56) References cited:
- Knud Möller ET AL: "Learning from Linked Open Data Usage: Patterns & Metrics", , 26 April 2010 (2010-04-26), XP055358727, Retrieved from the Internet: URL:http://richard.cyganiak.de/2008/papers /lod-usage-websci2010.pdf [retrieved on 2017-03-24]
- Markus Luczak-Rösch ET AL: "Statistical Analysis of Web of Data Usage", , 17 April 2012 (2012-04-17), XP055358933, Retrieved from the Internet: URL:http://web.archive.org/web/20120417152 721/http://ceur-ws.org/Vol-784/evodyn1.pdf [retrieved on 2017-03-27]
- Luca Costabello ET AL: "Access Logs Don't Lie: Towards Traffic Analytics for Linked Data Publishers", , 19 October 2016 (2016-10-19), XP055358685, Retrieved from the Internet: URL:http://ceur-ws.org/Vol-1690/paper61.pd f [retrieved on 2017-03-24]
- Anonymous: "Web analytics - Wikipedia", , 18 January 2016 (2016-01-18), XP055358736, Retrieved from the Internet: URL:https://en.wikipedia.org/w/index.php?t itle=Web_analytics&oldid=700390128 [retrieved on 2017-03-24]
- Bamshad Mobasher: "Chapter 12: Web Usage Mining", , 24 August 2015 (2015-08-24), XP055358760, Retrieved from the Internet: URL:http://web.archive.org/web/20150824052 125/http://facweb.cs.depaul.edu/mobasher/c lasses/ect584/Lectures/12-web-usage-mining .pdf [retrieved on 2017-03-24]

## Description

The present invention relates to access analytics for RDF stores on the web and can be used to improve security and performance of RDF (Resource Description Framework) linked data. In summary, linked data is data that is structured semantically so as to be machine-readable using RDF triples. For standard definitions of these and other terms below, the reader is referred to the definition section at the end of the description before the examples. The invention has a multitude of applications in providing information about use of this semantic data, allowing improvements in the underlying performance of the data stores which hold the linked datasets, and in security of the datasets.

Data providers have so far published hundreds of linked datasets and billions of triples on the Web, thus contributing to the birth of the so-called Web of Data. Companies and institutions have invested in server-side development, deployment, maintenance, and data curation. Nevertheless, linked datasets are still less popular than other solutions, and recently many technical support functions have started to question the efficiency of their use and their security.

Aside from getting acquainted with new skills (e.g. familiarity with the RDF model, knowledge of RDFS/OWL vocabularies, understanding of SPARQL), such a perception is also a consequence of limited awareness of how datasets are accessed by visitors. In other words, data providers do not have clear insights on or control of how triples are consumed and by whom. This gap has various consequences. Publishers are unable to monitor and fine-tune their data store performance from a Linked Data perspective: for example, they cannot efficiently update their caching strategy because they do not know which are the most popular RDF instances or classes. Also, since they cannot associate traffic spikes to real-world events, they cannot predict future heavy-load situations. They cannot identify and then bar visitors or queries that overload their triplestores with complex and potentially dangerous SPARQL queries.

Knud Oiler ET AL: "Learning from Linked Open Data Usage: Patterns & Metrics", 26 April 2010 (2010-04-26), XP055358727, discloses metrics for assessing Linked Data usage from the human and the machine perspective, taking into account different agent types and resource representations.

According to an embodiment of a first aspect of the invention, there is provided a system to provide visitor information about visitor requests to a dataset of linked RDF data, the system comprising: a loading module with a log ingestion unit to read and parse access logs of visitor requests from the linked dataset; a linked data-specific metric extractor to extract metrics related specifically to linked data, the metrics providing visitor information related to individual RDF resources in the dataset; a request counter in the linked data-specific metric extractor to count requests issued by visitors to each resource in the dataset, the request counter including requests using RDF dereferencing and requests using SPARQL queries, a SPARQL query count including separation of the RDF resources queried into URIs representing RDF instances, RDF classes, RDF properties and RDF graphs; and a database loader to store the visitor information computed by the metric extractor in a database which is linked to a query unit to answer enquiries about the visitor information.

According to this embodiment, requests using SPARQL queries as well as HTTP requests can be counted using information from a server log, which records such requests, including the resource in question. The separation of the SPARQL query count into URIs representing RDF instances, RDF classes, RDF properties and RDF graphs allows a detailed analysis of the queries using the structuring of the data, for use in management of a datastore storing the dataset. In linked data, every RDF resource is considered an "instance" of something. Nevertheless, some carry specific semantics: for example, RDF classes identify groups of RDF instances, i.e. sets of "things". RDF Properties describe relations between RDF instances. RDF Graphs are collections of RDF triples. Separate counters favour deeper understanding of access patterns; without them, the request count metric would not allow the user to tell at a glance which are the most popular relations between entities, or the most popular collections of instances. Of course the system may also include another (general) metric extractor to extract one or more metrics which are not specific to linked data.

In one example, the linked data-specific metric extractor includes a SPARQL metric extractor to extract metrics related to SPARQL query types and/or SPARQL query complexity. For example, the SPARQL metric extractor can extract counts for different SPARQL verbs and/or SPARQL query malformation and/or language tags. All this additional information can help a database administrator gauge the use of the dataset and adapt its storage strategy accordingly.

The SPARQL metric extractor may extract SPARQL query complexity based on SPARQL syntax analysis, for example classifying certain constructions/language as "heavy" (requiring more memory and/or processing from the datastore) or "light" (requiring less memory and/or processing from the datastore). There could be more divisions of complexity (for example including "medium"), and/or thresholding to identify queries which exceed an acceptable level of complexity.

In one embodiment, the queries are classified as light or heavy using a binary classifier, which may be trained on syntactic features of SPARQL queries, preferably wherein UNION statements, OPTIONAL statements, multiple joins, FILTER statements, and regular expressions in FILTERS indicate heavier complexity.

In a system as described above, the linked data-specific metric extractor may further include an RDF dereferencing interpreter to avoid double counting of access during an HTTP 303 redirect. For example, a request with an HTTP 303 redirect code as a response together with a request with an HTTP 200 ok code as a response for the same resource and visitor may be counted as a single request if they originate within a certain time frame.

In a suitable mechanism to avoid double counting, any request with an HTTP 303 redirect code is added to a "pending 303" list that keeps track of how many 303 patterns have been initiated, and which is labelled with the resource and visitor couple and if a request with an HTTP 200 OK code and the same label is detected with a timestamp that does not significantly differ from the HTTP 303 request according to a thresholding mechanism, a separate "pending 303" counter for the couple is decreased by 1 (indicating that such 303 pattern is now concluded), and the request counter is incremented by 1.

The resource may be processed to apply the naming convention for the dataset, for example to strip the file extension, in order to match the resource names in the HTTP 303 request and the HTTP 200 ok code.

As mentioned above, the system may further include a general metric extractor to extract metrics related to web audience. A visitor session detector may be provided.

The request counter can provide separate counts of HTTP and SPARQL queries. It may very simply include requests using SPARQL queries by counting the number of times a resource URI is included in SPARQL queries (that is included in the access log, and not found by a SPARQL query without the resource being included in the access log).

Advantageously, the loading module includes a filter which discards requests using a UA blacklist and/or an IP-based blacklist and/or a domain-based blacklist.

Preferably, RDF dereferencing and analysis of SPARQL queries take place in parallel, for a quicker process.

The linked data-specific metric extractor may extract one or more of the following metrics:
a request count of how many times a resource in the claim set has been accessed, including how many times the sources was dereferenced with HTTP and how many times the URI was found in SPARQL queries, including separation of the RDF resources queried into URIs representing RDF instances, RDF classes, RDF properties and RDF graphs;
a data access protocol count providing the separate counts of the HTTP lookups SPARQL queries;
a SPARQL query type metric indicating the number of light and heavy SPARQL queries set to the datasets;
an HTTP methods count providing count of requests issued using individual HTTP verbs, for example including GET, POST or HEAD; and
a request errors count providing a count of HTTP and SPARQL error response codes.

The SPARQL metric extractor can identify misuse of the dataset, for example by identifying unusual peaks of complex SPARQL queries (for example as categorised by a binary classifier), and in this case a visitor identified as a misuser may be added to a blacklist or filter at the data publisher/datastore and/or a misuse alarm may be generated, for example at the end of a specified time period. These measures may be taken automatically by the system or generated by dataset administrators, outside the main system processing.

The system may act as a decision support system for allowing improvements to datastore performance by detecting resources with more visitors than other resources and/or frequently executed SPARQL queries, thus supporting datastore administrators in fine-tuning current datastore caching policy or automatically adjusting the caching policy. An out-of-band module used by dataset administrators might compare the visitor information with information about a current datastore caching policy, and modify (or recommend modification of) a datastore caching mechanism so that resources with more visitors than other resources are preferentially cached and/or frequently executed SPARQL queries are preferentially cached. Whilst this module may be an out-of-band module used by dataset administrators, the linked-data specific metric extractor indicates such resources and queries.

According to an embodiment of a further aspect of the invention, there is provided computer-implemented method of providing visitor information about visitor requests to a dataset of linked RDF data, the method comprising: reading and parsing access logs of visitor requests from the linked dataset; extracting metrics related specifically to linked data, the metrics providing visitor information related to individual RDF resources in the dataset; the metric extraction including counting requests issued by visitors to each resource in a dataset, including requests using RDF dereferencing and requests using SPARQL queries, a SPARQL query count including separation of the RDF resources queried into URIs representing RDF instances, RDF classes, RDF properties and RDF graphs; storing the visitor information computed by the metric extraction module; and answering enquiries about the visitor information.

According to an embodiment of a further aspect of the invention, there is provided computer program which when executed on a computer runs a method of providing visitor information about visitor requests to a dataset of linked RDF data, the method comprising: reading and parsing access logs of visitor requests from the linked dataset; extracting metrics related specifically to linked data, the metrics providing visitor information related to individual RDF resources in the dataset; the metric extraction including counting requests issued by visitors to each resource in a dataset, including requests using RDF dereferencing and requests using SPARQL queries, a SPARQL query count including separation of the RDF resources queried into URIs representing RDF instances, RDF classes, RDF properties and RDF graphs; storing the visitor information computed by the metric extraction module; and answering enquiries about the visitor information.

The method, system and computer program as described hereinbefore may be provided as a subscription service to datastore managers (data publishers) over a network connection such as the web, or indeed may be an in-house tool used by a datastore manager and directly linked to the datastore. Use of the access logs by third parties would require permission by the datastore manager.

A method according to preferred embodiments of the present invention can comprise any combination of the previous apparatus aspects. Methods or computer programs according to these further embodiments can be described as computer-implemented in that they require processing and memory capability.

The apparatus according to preferred embodiments is described as configured or arranged to, or simply "to" carry out certain functions. This configuration or arrangement could be by use of hardware or middleware or any other suitable system. In preferred embodiments, the configuration or arrangement is by software.

Thus according to one aspect there is provided a program which, when loaded onto at least one computer configures the computer to become the system according to any of the preceding system definitions or any combination thereof.

According to a further aspect there is provided a program which when loaded onto the at least one computer configures the at least one computer to carry out the method steps according to any of the preceding method definitions or any combination thereof.

In general the computer may comprise the elements listed as being configured or arranged to provide the functions defined. For example this computer may include memory, processing, and a network interface.

The invention can be implemented in digital electronic circuitry, or in computer hardware, firmware, software, or in combinations of them. The invention can be implemented as a computer program or computer program product, i.e., a computer program tangibly embodied in a non-transitory information carrier, e.g., in a machine-readable storage device, or in a propagated signal, for execution by, or to control the operation of, one or more hardware modules. A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites and interconnected by a communication network.

Method steps of the invention can be performed by one or more programmable processors executing a computer program to perform functions of the invention by operating on input data and generating output. Apparatus of the invention can be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims. For example, the steps of the invention can be performed in a different order and still achieve desirable results. Multiple test script versions can be edited and invoked as a unit without using object-oriented programming technology; for example, the elements of a script object can be organized in a structured database or a file system, and the operations described as being performed by the script object can be performed by a test control program.

Elements of the invention have been described using the terms "module" and "unit" and functional definitions. The skilled person will appreciate that such terms and their equivalents may refer to parts of the system that are spatially separate but combine to serve the function defined. Equally, the same physical parts of the system may provide two or more of the functions defined.

For example, separately defined means may be implemented using the same memory and/or processor as appropriate.

Preferred features of the present invention will be now described, purely by way of example, with reference to the accompanying drawings, in which:
Figure 1a is an overview diagram of a system according to a general embodiment of the invention;
Figure 1b is an overview diagram of the architecture of a system according to an embodiment;
Figure 2a is an overview diagram of a method according to a general embodiment of the invention;
Figure 2b is a high-level description of a method according to an embodiment of processing logs;
Figure 3 is a breakdown of the ETL unit;
Figure 4 is a detailed ETL flowchart showing interaction with the metrics extraction unit;
Figure 5 is a block diagram of the metrics extraction units;
Figure 5b is a flowchart of an RDF dereferencing interpreter;
Figure 6 is a metrics extraction flowchart; and
Figure 7 is an overview diagram of a system architecture suitable for use with the embodiments.

The inventors have come to the realisation that a detailed solution for supplying Linked Data-specific visitor analytics to providers of this data (or to others) may require solving one or more of the following major challenges:
**A.** How to adapt web analytics metrics to Linked Data? More specifically, how to provide granular analytics tailored to the nature of the RDF model (instances, classes, graphs, properties)? Which metrics specific to the SPARQL query language could be defined?
**B.** Linked Data can be accessed with RDF dereferencing and with the SPARQL query language: how do we implement the extraction of analytics metrics in such dual access protocol scenario? How do we interpret RDF dereferencing? How do we dissect SPARQL queries for extracting SPARQL-specific metrics? How do we measure the popularity of SPARQL queries versus RDF dereferencing?

While tools for analysing websites traffic exist, none takes into account the specificities of Linked Data. Academic articles within the Semantic Web community may propose specific metrics for linked datasets analytics, but no comprehensive analytics tool for Linked Data publishers has ever been proposed.

Existing web analytics tools do not address the technical problems mentioned above. More specifically:
**A.** No existing system provides a set of Linked Data-specific metrics: none offers fine-grained access analytics for RDF classes, properties, graphs, or instances. Existing analytics platforms offer access analytics for HTML pages or web APIs only. Besides, no existing tool features SPARQL-specific metrics or SPARQL query insights.
**B.** No one extracts Linked Data-specific metrics in dual-protocol linked datasets: No one supports RDF dereferencing, no existing solution extracts access metrics from a SPARQL endpoint. Besides, to the best of the inventors' knowledge, there are no tools that measure the distribution of SPARQL and HTTP queries issued to a linked dataset.

Embodiments of the invention are designed to work specifically and only with linked datasets. They are not meant to be a generic web analytics platform for HTML pages or web APIs. Besides, they do not supply a visitor tracking mechanism. Although targeting Linked Data, the embodiments do not support structured content stored in HTML pages (e.g. microdata, RDFa). They do not provide statistics about downloads of linked datasets dumps. Because they analyse server-side access logs only, they cannot circumvent intermediate components between visitors and linked datasets such as NAT (in which multiple visitors use different instances of the same client with the same IP address), proxy servers, and caches: the metrics extracted by the system should then be considered as a lower-bound estimation. Note that the invention embodiments do not monitor linked datasets visitors in real time. Also, the system does not include a graphical user interface (GUI) - although invention embodiments can provide web APIs that can be used to build a GUI, maybe owned by a third-party.

Invention embodiments can propose a hosted (stored on a server so it can be accessed over the web) analytics method and system for linked datasets. The system fetches and mines access logs of registered Linked Data publishers and extracts traffic insights. The analytics system is designed for RDF data stores with or without SPARQL engine, and it offers a number of Linked Data-specific features which are currently not supported by prior art web analytics tools. The invention embodiments support linked datasets served by multiple web servers (e.g. under load-balancing scenarios).

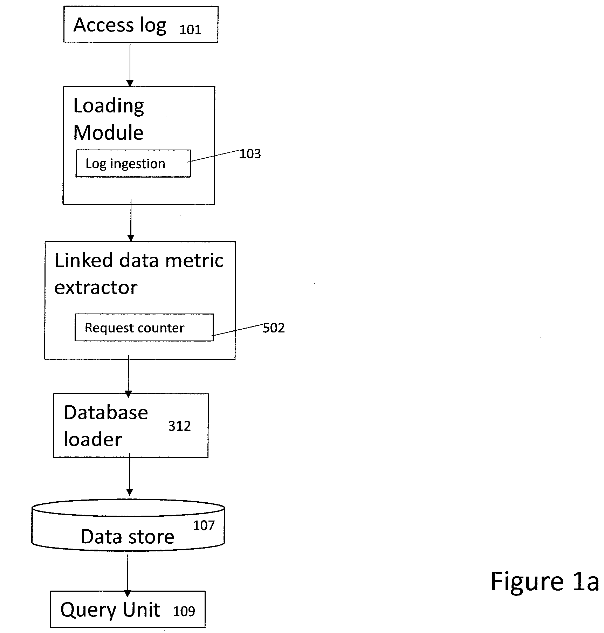

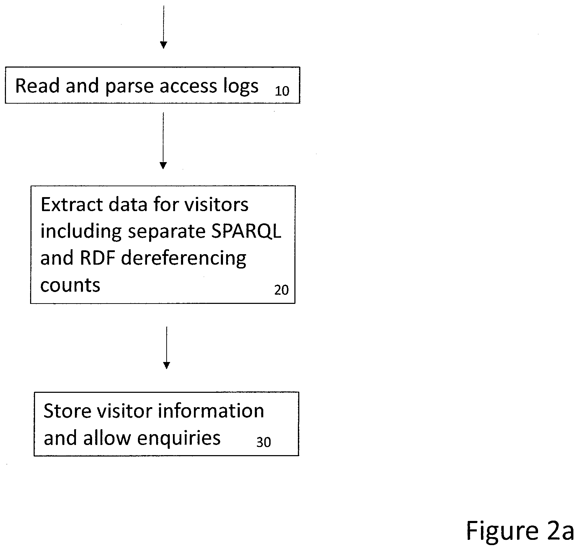

Figures 1a and 2a illustrate a general embodiment of the invention. Figure 1a is a top-level diagram of a system to provide visitor information. The system uses access logs 101, for example from one server or from many server. These servers may belong to one or more data publishers. The access logs can be provided in any suitable format, and can, for example, include log information about the visitor (IP address), the date/time of a request, the resource request or SPARQL query, and maybe other information such as an HTTP status code of the server response, the referrer (the URI of the web resources linking to the resource requested) and the user agent.

The loading module 102 has a log ingestion module 103 which can read and parse the logs.

The linked data-specific metric extractor 501 extracts metrics related specifically to linked data. These metrics providing visitor information related to individual RDF resources in the dataset, rather than more general metrics such as the number of sessions with a particular visitor or geolocation of the visitor.

A request counter 502 (which may be part of the linked data-specific metric extractor 501) counts visitor requests issued to each resource in a dataset. It includes a separate count of both RDF dereferencing (using an HTTP operation to find an RDF resource) and SPARQL queries. The SPARQL query count can include separation of the RDF resources queried into URIs representing RDF instances, RDF classes, RDF properties and RDF graphs. It may also differentiate between heavy and light SPARQL queries, as set out in more detail later.

Finally, a database loader 312 loads the visitor information computed by the metric extractor into a database. This database (stored for example in a data warehouse) can be linked to a query unit such as a MOLAP unit as described in more detail later, to answer enquiries about the visitor information. The enquiries might be entered into the query unit via one or more web APIs (Application Programming Interfaces).

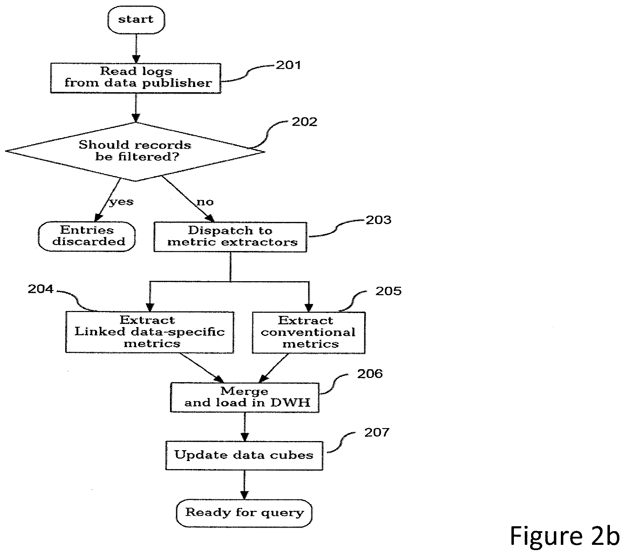

Figure 2b is a top-level diagram of the method of invention embodiments. First the access logs are read and parsed, 10. The data is extracted for visitors, including a separate SPARQL and RDF dereferencing count, 20. Finally the visitor information is stored and enquiries are received, 30.

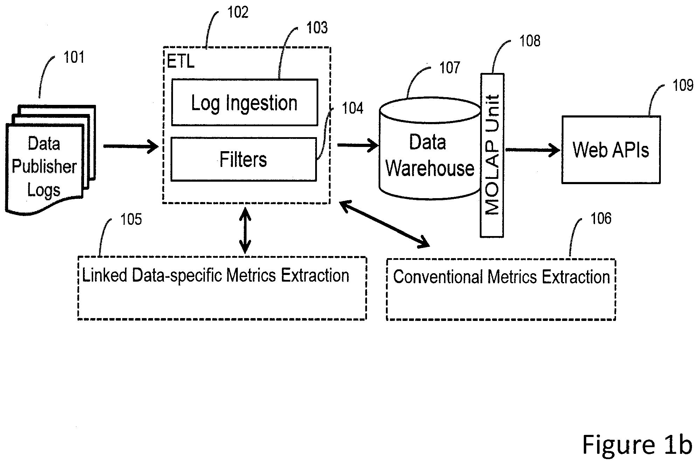

Figures 1b and 2b show a more complex embodiment which offers further functionality and options, providing:
**A.** a set of detailed Linked Data-specific metrics, including SPARQL-specific metrics and fine-grained access analytics for each category of RDF resource (instances, classes, graphs, and properties);
**B.** extraction of the aforementioned Linked Data-specific metrics: this includes full support of RDF dereferencing, extraction of SPARQL-related statistics (including SPARQL complexity classification), and statistics to compare the popularity of RDF dereferencing against SPARQL queries.

The proposed invention supports linked datasets served by multiple web servers (e.g. under load-balancing scenarios).

The sections detailing the system and method according to the more complex embodiment are organised as follows: Section **Metrics** explains what the system measures. Section **System Overview** introduces the system architecture, and explains the components interactions. The Extract, Transform, and Load sub-system (ETL) is described in Section **ETL,** while **Metrics Extraction** gives a detailed account of how metrics are derived from raw logs, including data mining tasks such as SPARQL query complexity classification, visitor session detection, and human/machine visitor classification. The storage tier and the system interface are described in Section **Data warehouse, MOLAP, and Web APIs.**

### Metrics

Extracting access insights from the logs of linked datasets requires the collection, the measurement, and the analysis of how RDF triples are consumed by visitors. A number of metrics (i.e. measures) are therefore required.

The analytics system presented in this embodiment adopts web analytics metrics tailored to the Linked Data scenario. When required, Linked Data-specific metrics have been defined.

Metrics are grouped into three categories:
- **Content metrics:** they describe visits from the point of view of RDF resources included in linked datasets (e.g. how many times a resource is accessed, how many misses, etc.). These metrics are Linked Data-specific and include sessions information (e.g. session length, duration, size, etc.);
- **Protocol metrics:** these measures include information and statistics on the access protocols used by the linked dataset visitor. These metrics are Linked Data-specific;
- **Audience metrics:** these metrics give a detailed account of visitor information (e.g. location, network provider). They are adapted from prior art web metrics.

The measures described above are available for user-defined time ranges, and come at different temporal granularity levels (i.e. they can be retrieved by year, month, week, or day). The web APIs can be queried by anyone involved in the linked dataset operation. Typically this includes the data publisher(s), but it could be anyone with proper access credentials (e.g. investors, managers, other stakeholders etc.)

In the following, preferred metrics are described in detail:

### Content Metrics

These measures describe visits from the point of view of RDF resources included in linked datasets. See **Example 1** at the end of the specification.

| ***Metric*** | ***Description*** |
|---|---|
| ***Request count*** | A measurement of how many times an RDF resource in the dataset has been accessed over a period of time. |
| | Unlike traditional web analytics tools, this metric includes: |
| | - how many times the resource has been dereferenced with HTTP. |
| | - how many times the resource URI has been found in SPARQL queries (note that this underestimates the times a resource is requested by SPARQL, since it cannot predict if the resource will be part of a SPARQL query result set by only analyzing the query syntax). |
| | |
| | *Request count* is also defined for categories of RDF resource, i.e. we distinguish between request count for RDF graphs, classes, properties, and instances. |

### Protocol Metrics

These measures include information and statistics on the access protocols used by the linked dataset visitor.

| ***Metric*** | ***Description*** |
|---|---|
| ***Data* Access *Protocol*** | The separate counts of HTTP lookups and SPARQL queries. This information is helpful to determine whether visitors prefer HTTP lookups or if they rather execute SPARQL queries (over a given time frame). |
| ***SPARQL Query type*** | The counts of SPARQL verbs. It includes for example the count of SELECT, ASK, DESCRIBE, and CONSTRUCT queries. |
| ***SPARQL Query Complexity*** | Indicates the number of "light" and "heavy" SPARQL queries sent to the triplestore. |
| ***HTTP Methods Count*** | The count of how many requests have been issued for the most popular HTTP verbs (GET, POST, HEAD). |
| ***Request Errors Count*** | The count of HTTP and SPARQL response codes occurred in a time frame. |
| | It distinguishes between: |
| | - **Misses:** HTTP 404 Not Found errors. This measure is useful to understand whether visitors are looking for resources which are not currently included in the dataset. |
| | - **Other client-side errors:** other HTTP 4xx errors. This is important for a series of reasons, e.g. measuring how many malformed SPARQL queries have been issued (HTTP 400), or to detect whether visitors attempt to access forbidden RDF resources (HTTP 403). |
| | - **Server-side errors:** the count of HTTP 5xx error codes. Important to identify server-side misconfiguration, or estimate whether error-triggering SPARQL queries have been repeatedly issued to the triplestore. |

### Audience Metrics

These web analytics metrics give a detailed account of visitor information.

| ***Metric*** | ***Description*** |
|---|---|
| ***Location*** | Country and city of origin of a visitor. |
| ***Network provider*** | The visitor host network. |
| ***Language*** | The preferred language requested by a visitor. Such information is extracted from the Accept-Language HTTP header (for HTTP lookups) and by extracting xsd language-tagged string literals in SPARQL queries. |
| ***User Agent type*** | The visitor user agent type. It can belong to the following categories: |
| | - **Software Library** (e.g. Jena, Python sparql-client, etc.) |
| | - **Browser** and **Mobile Browser** (Chrome, Safari, etc.) |
| | - **Other** (e.g. email clients) |
| ***Visitor Type*** | The nature of the visitor, that can be either: |
| | - human (e.g. manually-written SPARQL queries, one-time HTTP lookups) |
| | - machine (bot, crawlers, semantic web services, etc.) |
| ***New vs Returning visitors*** | New visitors vs visitors that have performed at least one visit before. |
| ***External Referrer*** | When dereferencing an RDF resource, the HTTP request might contain a third-party URI that identifies the resource "linking" to the data store. |
| ***Sessions count*** | The global count of all sessions for all visitors. |
| ***Session size*** | The number of requests sent by a visitor during a session (requests might be a mix of HTTP lookups and SPARQL queries). |
| ***Session depth*** | The number of distinct RDF resources (graphs, classes, properties, instances) requested by a visitor during a session. |
| ***Session duration*** | The duration of a session. |
| ***Average session size*** | The average size of the sessions detected over a given time frame |
| ***Average Session depth*** | The average depth of the sessions detected over a given time frame. |
| ***Average session duration*** | The average duration of the sessions detected over a given time frame. |
| ***Bounce Rate*** | Indicates the percentage of sessions that contain only one resource request (whether this is an HTTP lookup or a SPARQL query). |

### System Overview

Figure 1b presents the overall architecture of the analytics system for Linked Data, including the following coarse-grained functional components:
**Extract-Transform-Load (ETL) Unit.** The ETL Unit (102) is in charge of fetching and parsing data publishers' logs. On a daily basis, for each registered data publisher, the **Log Ingestion** component (103) reads log files from one or multiple linked dataset servers, and parses their content. Logs are filtered according to a series of filters (104) (e.g. requests originated from botnets and search engine crawlers are discarded).
**Metrics Extraction Unit** (105, 106). This core functionality of the system includes two components:
   **Linked Data-specific Metrics Extraction** (105): extracts Linked Data-specific metrics such as Content metrics (i.e. resource request count, 106) and SPARQL-related Protocol metrics. Linked Data-metrics extraction supports HTTP RDF dereferencing and SPARQL queries inspection.
   **Other Metrics Extraction** (106): complements Linked Data-specific metrics with prior art web analytics audience measures, such as IP-based geolocation, and network provider host name, and HTTP-related metrics (e.g. HTTP verbs).
   **Data Warehouse, MOLAP Unit, and Web APIs** (107, 108, 109). Visitor information computed by the Metrics extraction Units is stored in a Data Warehouse (DW). The DW supports data cubes and is equipped with a MOLAP (Multidimensional Online Analytical Processing) Unit (108), which is SQL-compliant. Note that the MOLAP unit answers queries with sub-second latency. The system wraps the MOLAP Unit (108) with RESTful Web APIs (109) that can be queried by third-party applications (e.g. a web-based reporting app).

The flowchart in Figure 2b describes how the components shown in Figure 1b interact. The flowchart is executed for each registered data publisher on a daily basis and it is thus periodically repeated:
**201.** The log crawler fetches and parses access logs from the back-end data publishers who subscribed to the service
**202.** Logs are filtered according to a number of criteria (e.g.: requests originated from known botnets are discarded, multiple requests due to HTTP content-negotiation are not counted twice, etc.) Entries that do not satisfy filtering criteria are discarded.
**203.** Log entries that have not been filtered are dispatched to metric extractors that are run in parallel mode.
**204.** Linked Data-specific metrics are extracted by Linked Data Metrics Extraction Unit (Figure 1b, 105).
**205.** Other metrics are extracted by the Other Metrics Unit (Figure 1b, 106).
**206.** When 204 and 205 have been executed, the system merges enriched log information. Merged data is loaded into data warehouse (DWH).
**207.** Data cubes in the DWH are updated with the newly loaded information.

### Extract-Transform-Load (ETL) Unit

The ETL Unit fetches and parses the logs of data publishers registered to the service. On a daily basis, for each registered data publisher, log files from one or multiple linked dataset servers are read and parsed.

The format of linked datasets access logs vary, as there exists no established standard (some might be data publisher-specific). The de-facto approach is the Extended Log File Format, based on the Apache Commons Logfile Format. Example 2 at the end of the specification uses the content of a simplified access log record that complies with the Apache Commons Logfile Format. If other fields are present, they may be discarded by the analytics system.

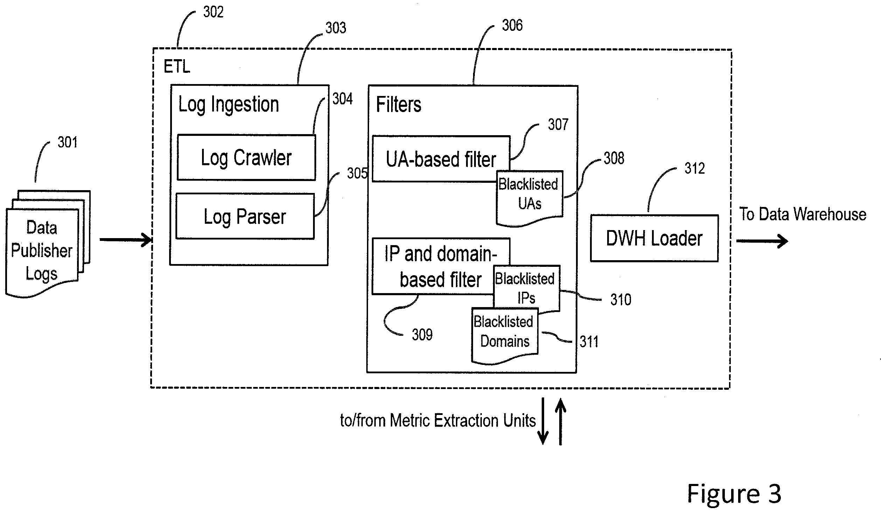

Raw log entries like the one showed in Example 2 are processed by the ETL unit (302). Figure 3 shows the ETL unit in more detail:
**Log ingestion** (303). The Log Ingestion component is in charge of fetching and preprocessing logs. It includes the following modules:
   - **Log Crawler** (304). It reads log files (301) from one or multiple linked dataset servers.
   - **Log Parser** (305). The module parses log records using a regular expression-based approach.
**Filters** (306). Log records are filtered by two filters (306), to discard undesired requests originated from botnets and search engine crawler:
   - **UA-based filter** (307). Requests (HTTP and SPARQL) are discarded if the associated HTTP user-agent field corresponds to a well-known search engine crawler (e.g. googlebot) or a Semantic Web indexer. An extensible list of blacklisted UAs is included in the system (308).
   - **IP and domain-based filter** (309). To prevent pollution in metrics values, malicious requests from botnets are filtered using third-party IP-based (310) and domain-based (311) extensible blacklists available on the web.
**Data warehouse (DWH) Loader** (312). Once logs have been imported and metrics computed by the Metric Extraction Unit, records must be loaded in the data warehouse for persistent storage. The DWH loader also refreshes the data cubes associated to the newly extracted metrics.

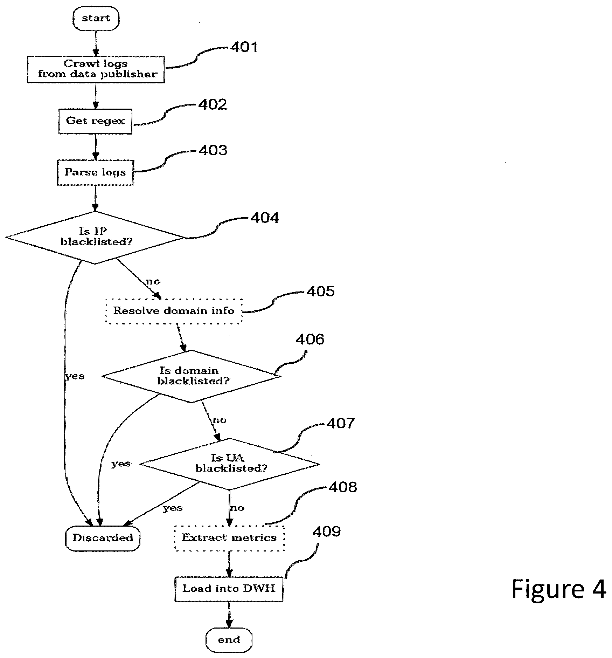

Figure 4 shows the detailed ETL flowchart description, thus explaining how the components in Figure 3 interact:
**401.** The log crawler fetches and parses access logs from the back-end data publishers who subscribed to the service.
**402.** The regular expression (regex) associated to the data publisher access logs format is retrieved from a list.
**403.** The regular expression is used by to parse log records.
**404.** The originating IP address of each request is checked against a blacklist. If present in such list, the system infers that the request is originated by an undesired host (e.g. a botnet), and it thus discards the record(s).
**405.** The originating host domain is resolved. Note that such operation is carried out by the Metrics extraction unit (hence the dotted rectangle).
**406.** A filter checks whether the domain is not blacklisted. In that case, the record(s) are discarded.
**407.** An additional filter checks whether the user agent (UA) associated to current records is blacklisted (e.g. it is a search engine crawler). In that case, the request is discarded.
**408.** Metrics are extracted. Note that this operation is carried out by the Metrics extraction unit (hence the dotted rectangle).
**409.**The DWH Loader stores extracted metrics to the data warehouse and updates the associated data cubes.

### Metrics Extraction

The core functionalities of the analytics systems reside in the Metrics Extraction Unit. This is where raw logs parsed by the ETL process are mined. Metric extraction includes two components: the Linked Data-specific Metrics Extraction and the Other Metrics extraction:
**Linked Data-specific Metrics Extraction** (501). This component extracts Linked Data-specific metrics that are not provided by existing state-of-the-art analytics tools.
**Request Counter** (502). This is where the system computes how many requests have been issued by visitors to each resource in the dataset. Unlike traditional web analytics, the Request Counter takes into account the dual access protocol offered by linked datasets (RDF dereferencing and SPARQL). This means that it counts how many times an RDF resource has been dereferenced with HTTP requests, but also how many times its URI has been included in SPARQL queries.

Unlike existing works, counting the occurrences of RDF resources in SPARQL queries also enables tracking their *nature.* This means that the system also provides *aggregate* request count for all the instances, classes, properties, and graphs. While request count for RDF dereferencing is straightforward (the Request Counter considers all resources as RDF entities, since no additional information is available from logs), associating URIs extracted from SPARQL queries to their nature requires parsing the query for the following tokens:
- RDF graph URIs (e.g. FROM, FROM NAMED, and GRAPH statements).
- Object URIs associated to the rdf:type property (or to its alias a) are interpreted as RDF classes.
- Property URIs in the graph pattern are regarded as RDF properties.
- Other URIs, whether they are subjects or objects, are considered instances.

***Example 3*** (shown at the end of the specification) shows an input log with three log entries and a resulting URI count and classification into instance, class, property and graph.

**RDF Dereferencing Interpret** (503). A distinctive feature of this invention embodiment is the support for RDF dereferencing implemented with *303 URIs.* This technique, also known as *303 redirect,* is adopted by Linked Data publishers to serve RDF resources on HTTP. It consists in the following steps:
1. The Linked Data client performs an HTTP GET request on the desired URI, specifying that it requires RDF content back with the header Accept: application/rdf+xml (conversely, a client might desire the HTML representation using Accept: text/html).
2. The server replies with 303 See Other, specifying the URI pointing at the RDF representation of the required resource (or at its HTML, if required).
3. The client performs a second HTTP GET to the URI returned at step 2.
4. The server answers with 200 OK and the required RDF (or HTML).

One of the downsides of RDF dereferencing implemented with 303 redirect is that a client must send two HTTP requests to obtain a resource. As a consequence, access logs contain duplicate records.

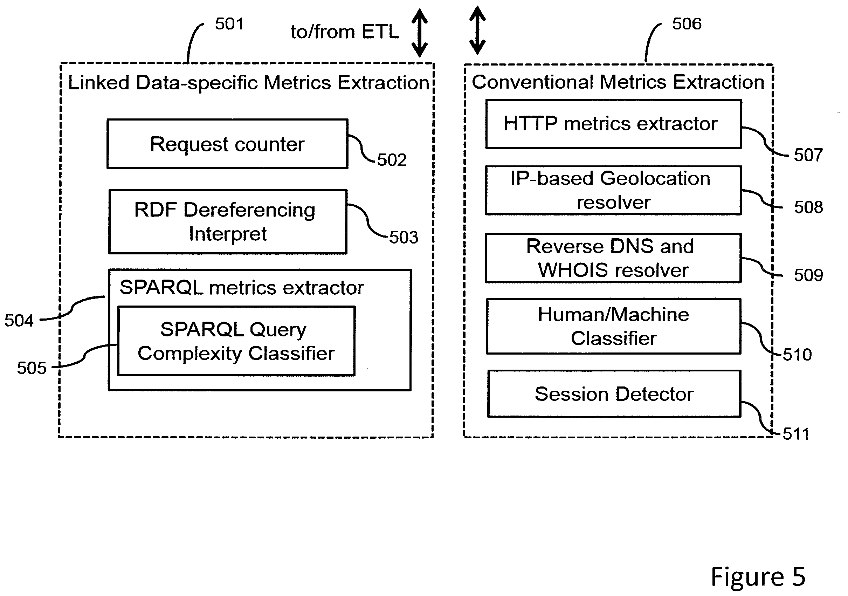

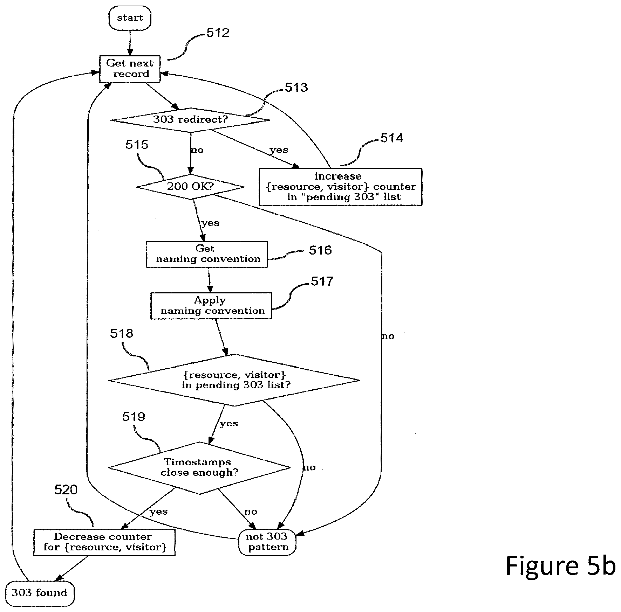

Unlike existing tools, the system presented here features the RDF Dereferencing Interpret (504). This component knows the sequence of operations required by the 303 redirect mechanism, and therefore removes duplicate records from logs, thus not polluting the request count. 303 pattern detection is carried out by the RDF Dereferencing Interpret (504) as for the flowchart in Figure 5b:
**512.** A record's tokens are passed to the RDF Dereferencing Interpret. Tokens include timestamp, resource name, HTTP status code, visitor IP and user agent string.
**513.** The system checks whether the HTTP code is 303 Redirect.
**514.** If yes, the couple {resource, visitor} is added to a list and it is associated a counter which represents the number of times the couple {resource, visitor} has initiated a 303 pattern.
**515.** If it is not a 303 direct, the system checks if it is a 200 OK.
**516.** If this is so, the system gets the 303 resource naming convention for the registered data provider (e.g. adding .rdf to resources when the HTTP Accept: application/rdf+xml is present). Naming conventions are stored in configuration files.
**517.** The system applies the naming convention to the requested resource (e.g. strips the file extension from the resource name).
**518.** By using the resource processed by the proper naming convention, the system checks whether the couple {resource, visitor} is included in the "303 pending" list (i.e. this steps checks whether a 303 pattern has already been partially detected for a resource and a visitor). Note that visitors are uniquely identified by their IP address and user agent string.
**519.** If {resource, visitor} is included in the 303 pending list, checks if the timestamp of 303 and 200 requests do not significantly differ.
**520.** If this is so, the system has detected a 303 pattern. The pending 303 counter for the couple {resource, visitor} is decreased. If it reaches zero, the entry is removed from the list. At the end of this sequence, the request counter for the RDF dereferencing sequence is also increased (as part of step 520).
Example 4 shows 4 HTTP requests to resource e1 and discusses how the 303 patterns are detected.

**SPARQL Metrics Extractor** (504). This component extracts a number of measures from access log records that include SPARQL queries. These measures include:
- SPARQL verb, i.e. SPARQL query type (e.g. SELECT, ASK, DESCRIBE, CONSTRUCT, etc.);
- whether a SPARQL query is malformed;
- Language tags, by extracting language-related SPARQL functions such as langMatches() or lang(), or by extracting tagged string literals such as "Roberto"@es.
- Query complexity: The **SPARQL Query Complexity Classifier** (505) predicts the complexity of the query with a given level of confidence. In other words, the query complexity classifier predicts with given accuracy whether a SPARQL query required little computational and memory resources (*light*), or if it rather caused heavy load on the triplestore (*heavy*). This is achieved by relying only on SPARQL syntax analysis. The component comprises an off-the-shelf supervised binary classifier (linear support vector machine, SVM), trained on a number of syntactic features extracted from SPARQL queries.

**Example 5.** Two sample SPARQL queries are shown. Query A is considered to be a "light" query, whereas Query B is considered to be "heavy" (note the presence of UNION, OPTIONAL, and FILTER statements). The example is presented at the end of the specification.

**Other Metrics Extraction** (506). This complements the extraction of Linked Data-specific metrics with web analytics audience measures that are already provided by a number of works cited in prior art. The component includes the **Audience Metrics Unit** (510), which is divided in:
**HTTP Metrics Extractor** (507). This component extracts HTTP-related metrics, including:
   - HTTP verb: (POST, HEAD, GET, etc.)
   - HTTP error codes: Misses: (HTTP 404 Not Found); other HTTP 4xx errors (useful to detect whether visitors attempt to access forbidden RDF resources - HTTP 403); server-side errors (5xx error codes). 5xx errors help identify server-side misconfiguration, or estimate whether repeated SPARQL queries trigger errors in the underlying triplestore.
   - HTTP referral
   - HTTP preferred language
**IP-based Geolocation resolver** (508). Resolves an IP address to a geographical location (country, subdivision, city).
**Reverse DNS and WHOIS Resolver** (509). Resolves an IP address to the associated domain name. It also looks up the WHOIS database to find out which institute or company registered the domain from where the request has been issued.
**Human/Machine Classifier** (510). Looks up user agent client strings to determine their category, i.e. desktop browsers, mobile browsers and software libraries. Requests originated by software libraries are considered to be issued by software agents (*machines*), whereas browsers and mobile browsers lead to *human* visitors.
**Session Detector** (511). This component carries out the automatic detection of visitor sessions. It implements the Hierarchical Agglomerative Clustering algorithm presented by Murray et al. Also, statistics about sessions are computed (session length, depth, size, and bounce rate).

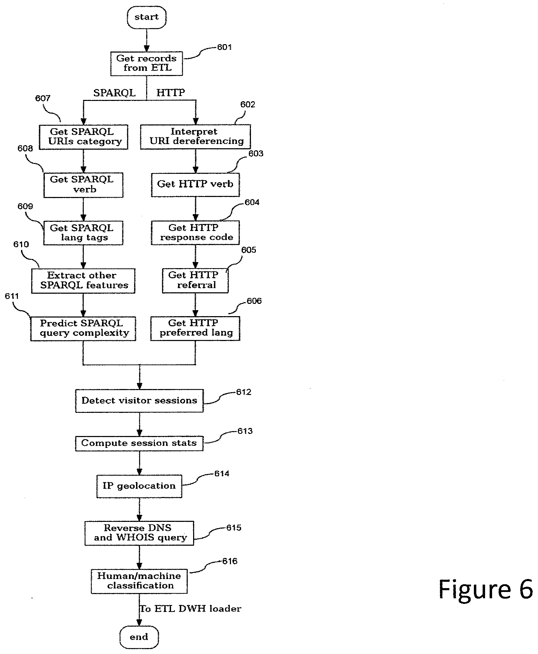

The flowchart included in Figure 6 summarises the mutual interaction of the components in the Metrics Extraction Unit:
**601.** Records are received from the ETL Unit.

If records contain an HTTP query (i.e. RDF dereferencing):
**602.** Interpret RDF dereferencing, thus properly detecting 303 patterns.
**603.** Get the HTTP verb (GET, POST, HEAD, etc.).
**604.** Get HTTP response code.
**605.** Extract the HTTP referral (if present).
**606.** Get HTTP preferred language (Accept-Language: header, if present).

If Records contain a SPARQL query:
**607.** Extract the nature of RDF URIs included in the SPARQL query (classes, properties, instances, or graphs).
**608.** Get the SPARQL verb (SELECT, ASK, DESCRIBE, CONSTRUCT, etc.).
**609.** Extract multilingual-related SPARQL statements to extract the languages of interests for the visitors.
**610.** Extract SPARQL syntactic features that will be used by the query complexity classifier (e.g. presence of OPTIONAL, UNION, FILTER, etc.).
**611.** Predict whether queries are *light* or *heavy.*

For both SPARQL and HTTP queries:
**612.** Detect visitor sessions
**613.** Compute session-related measures (length, depth, size, bounce rate).
**614.** Perform IP geolocation lookup to get city, subdivision, and country of origin of the visit.
**615.** Perform reverse DNS lookups and WHOIS queries to convert IP addresses to domain names and company/institution names of the originating requests.
**616.** Classify requests by the type of user agent string (browsers and mobile browsers lead to human visitors, software libraries to machines (i.e. software agents).

### Data Warehouse, MOLAP Unit, and Web APIs

Once metrics have been computed by the Metric Extraction Unit (Figure 1b, 105, 106), they are persisted on disk. The analytics system includes an off-the-shelf data warehouse with MOLAP (Multi-Dimensional Online Analytical Processing) capabilities, and therefore models information in data cubes, i.e. data arrays with multiple dimensions (Figure 1b, 110, 111).

New data is added to the data warehouse on a daily basis by the ETL unit, which also refreshes data cubes content with the newly loaded information. The off-the-shelf data warehouse MOLAP interface is SQL-compliant and answers queries with sub-second latency.

The system wraps the SQL-compliant MOLAP Unit (Figure 1b, 111) with RESTful Web APIs (Figure 1b, 112) that can be queried by third-party applications (e.g. a web-based reporting app). The APIs accepts SQL queries and returns data in JSON serialization.

Embodiments of the invention provide an apparatus and method to extract, compute, and deliver traffic analytics for one or more datasets to Linked Data publishers, for example to aid security specialists or technical support.

A system according to a particular embodiment of the invention can include Linked Data-specific features which are currently not supported by prior art web analytics tools, and can solve or mitigate the two technical problems presented above as follows:
**A.** It can provides Linked Data-specific metrics, including SPARQL-specific metrics. It can also support fine-grained analytics for each category of RDF resource (instances, classes, graphs, and properties);
**B.** the extraction of the aforementioned Linked Data-specific metrics can fully support RDF dereferencing and can include the extraction of SPARQL-related statistics (including SPARQL complexity classification), as well as figures to compare the popularity of RDF dereferencing against SPARQL queries. Hence technical datastore managers can better understand the usage and adapt the dataset storage and caching accordingly.

Analytics might show that specific triples have never been accessed, thus potentially raising questions about lack of documentation published with the dataset. A system according to invention embodiments also brings benefits for system administration: it helps identify and prevent abuses (e.g. a high number of heavy SPARQL queries sent by the same visitor). Knowing which are the most popular triples makes resource caching easier (the same benefits apply to improve caching strategies for SPARQL queries issued to a triplestore).

Since the system does not come with a predefined user interface (UI), any web UI is supported via the Web APIs presented previously. Besides, the invention does not rely on any visitor tracking mechanism, thus respecting visitors' privacy.

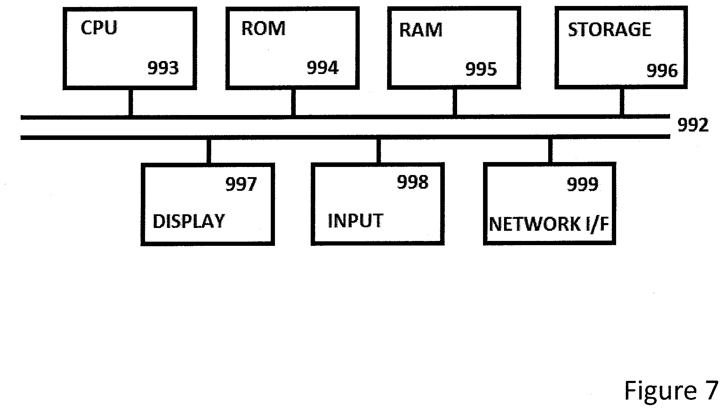

Figure 7 is a block diagram of a computing device, such as a data storage server, which embodies the present invention, and which may be used to implement a method of an embodiment.

The computing device comprises a processor or computer processing unit (CPU) 993, memory, such as Random Access Memory (RAM) 995, and storage, such as a hard disk, 996. Optionally, the computing device also includes a network interface 999 for communication with other such computing devices of embodiments and with the user via an API. For example, an embodiment may be composed of a network of such computing devices. Optionally, the computing device also includes Read Only Memory 994, one or more input mechanisms such as keyboard and mouse 998, and a display unit such as one or more monitors 997. The components are connectable to one another via a bus 992.

The CPU 993 is configured to control the computing device and execute processing operations. The RAM 995 stores data being read and written by the CPU 993. The storage unit 996 may be, for example, a non-volatile storage unit, and is configured to store data.

The display unit 997 displays a representation of data stored by the computing device and displays a cursor and dialog boxes and screens enabling interaction between a user and the programs and data stored on the computing device. The input mechanisms 998 enable a user to input data and instructions to the computing device.

The network interface (network I/F) 999 is connected to a network, such as the Internet, and is connectable to other such computing devices via the network. The network I/F 999 controls data input/output from/to other apparatus via the network.

Other peripheral devices such as microphone, speakers, printer, power supply unit, fan, case, scanner, trackerball etc may be included in the computing device.

Methods embodying the present invention may be carried out on a computing device such as that illustrated in Figure 7. Such a computing device need not have every component illustrated in Figure 7, and may be composed of a subset of those components. A method embodying the present invention may be carried out by a single computing device in communication with one or more data storage servers via a network. A method embodying the present invention may be carried out by a plurality of computing devices operating in cooperation with one another.

As used herein, a processor or CPU 993 may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The storage may include a computer readable medium, whose term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

**Definitions.** This document makes use of the following terms, primarily as used by The World Wide Web Consortium (W3C), which is an international community that develops open standards to ensure the long-term growth of the Web and/or as used by the IETF HTTP protocol:
- ***Linked Data.** A data publishing paradigm for sharing machine-readable data on the Web* as *interlinked datasets. Linked Data uses web and semantic web technologies such* as *HTTP, RDF, RDFS*/*OWL, and SPARQL.*
- ***Linked Dataset (RDF Dataset).** A dataset compliant with Linked Data best practices. The data is represented* as *an RDF graph, and single statements consist in RDF triples. Data is modelled with RDFS*/*OWL vocabularies, and can be accessed by means of HTTP operations or SPARQL queries.*
- ***Data Publisher (Data Provider).** Any individual, institution, or company that publish data on the web, whether this is open, paywall-protected, or access-restricted. Data publishers might publish their dataset* as *Linked Data (Linked Datasets), or with other methods (web APIs, relational databases dumps, text files, etc.). This document focuses on Linked Data publishers only.*
- ***Visitor.** A uniquely identified human or machine that accesses* a *Linked Dataset using a Linked Data Client (e.g. browser, desktop application, mobile application). In this document a visitor is uniquely identified by the couple {IP address, user agent}.*
- ***HTTP.** The Hypertext Transfer Protocol (HTTP) is an application-level protocol for distributed, collaborative, hypermedia information systems.*
- ***URI.** A Uniform Resource Identifier (URI) is a compact sequence* of *characters that identifies an abstract or physical resource.*
- ***RDF.** RDF is a standard model for data interchange on the Web. RDF has features that facilitate data merging even if the underlying schemas differ, and it specifically supports the evolution* of *schemas over time without requiring all the data consumers to be changed.*
- ***RDF Triple.** A Triple is an instance* of a *statement according to the RDF model. It consists of three components: a subject, which is typically a URI, a predicate (which is a URI), and an object, typically a URI or a literal value (e.g. a string, a number,* a *date, etc.) Triples are written in the "subject predicate object" form.*
- ***Triplestore (RDF Store).** Triplestores are graph database managers for linked datasets. Triplestores model data* as *an RDF graph, and can be queried with SPARQL via an embedded SPARQL engine.*
- ***Vocabulary.** In the context of Linked Data, Vocabularies are lightweight ontologies defined with RDFS and OWL. While RDF deals with the graph-based data model, Vocabularies provide domain-specific schema information such* as *entity classes and predicate types.*
- ***RDFS*/*****OWL.** RDFS (RDF Schema) is a language to describe lightweight ontologies (Vocabularies). When the expressivity of RDFS is not enough, Vocabularies can use OWL, which is a richer language to describe ontologies. Both languages are based on RDF syntax (i.e. RDFS and OWL ontologies are indeed RDF data).*
- ***SPARQL.** SPARQL is* a *set of specifications that provide languages and protocols to query and manipulate RDF graph content on the Web or in an RDF store.*"
- ***RDF dereferencing.** In the context of Linked Data, dereference a URI indicates an HTTP GET operation aimed at "looking up" an RDF resource. Dereferencing an RDF resource might imply a sequence of GET HTTP operations, due to the adoption of HTTP content negotiation and 303 Redirect HTTP response code.*
- ***Session.** A Session is defined* as a *sequence of requests issued with no significant interruptions from a uniquely identified visitor. A session expires after a certain amount of inactivity.*
- ***User agent.** A field of the HTTP protocol that "contains information about the user agent originating the request. [...] The User-Agent field-value consists of one or more product identifiers [...] which together identify the user agent software and its significant subproducts"*
- ***Data Warehouse.*** A *data warehouse (DW or DWH), also known* as *an enterprise data warehouse (EDW), is a system used for reporting and data analysis.*
- ***Data Cube.** Also known* as *OLAP cube,* a *data cube is* a *data array with multiple dimensions*
- ***MOLAP.** An acronym for Multi-dimensional online analytical processing. It is a processing paradigm for querying data warehouses and data cubes over multiple dimensions. It requires the pre-computation of data dimensions.*

### Examples

### Example 1

| *An RDF dataset contains the following triples:* | |
|---|---|
| | :John a foaf:Person. |
| | :Alice a foaf:Person. |
| | :Bob a foaf:Person. |
| | |

| *The following two SPARQL queries are issued to the system:* | |
|---|---|
| SELECT * | SELECT * |
| WHERE {:John ?p ?o.} | WHERE {?s a foaf:Person.} |
| Query A | Query B |
| | |
| *Both queries requested the RDF resource* :John, *(we know from the first triple in the dataset that* :John *belongs to the class* foaf: Person, *hence Query B also involve* :John*)*. *Although the exact Request Count_{:John} is 2, our system does not consider Query B, since the request count computation for SPARQL queries is limited to the count of explicit URIs occurrences in the query (i.e. we only consider the URI* :John, *in Query A). Hence, we estimate a Request Count_{:John}*=*1.* | |

### Example 2

Consider the following access log record shown at the end of the specification (which complies with the Apache Commons Logfile Format). The ETL Unit must parse the following fields:
- Visitor's IP Address
- Timestamp
- Requested resource: this might be any RDF resource from the dataset. This field might instead contain a SPARQL query sent to the dataset SPARQL endpoint. (see picture at the end of the specification).
- HTTP Status Code of the response (e.g. 200, 303, 404, 500, etc.)
- Size of the payload (not used by the analytics system)
- Referrer: the URI of the web resource linking to the RDF resource being requested.
- User Agent (UA) string: a string identifying the client used to perform the request.

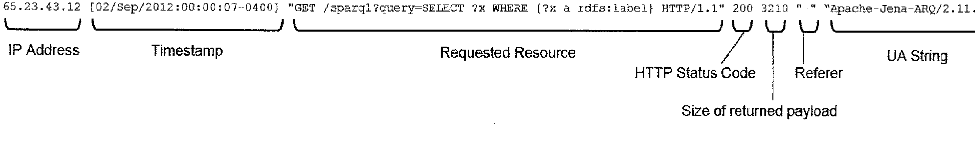

### Example 3

The following input log contains three log entries:

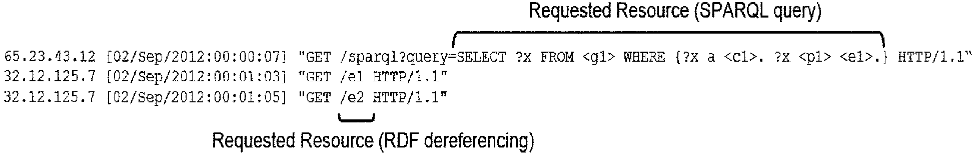

The Request Counter receives a SPARQL query (line 1) and two RDF dereferencing (lines 2 and 3). The analysis of the SPARQL query leads to identify a number of URIs representing different RDF resources of different nature: one graph <g1>, one class <c1>, one property <p1>, and one entity <e1>.

Line 2 on the other hand includes an HTTP GET for resource <e1> (dereferenced RDF resources are always considered as instances). Hence, the counter of <e1> is increased. Line 3 also dereferences RDF, this time resource <e2>.

The table below summarizes the request count extraction for the above three log lines:

| *Nature* | *URI* | *URI count* | *Aggregate* |
|---|---|---|---|
| | <e1> | *2* | |
| *Instance* | <e2> | *1* | *3* |
| *Class* | <c1> | *1* | *1* |
| *Property* | <p1> | *1* | *1* |
| *Graph* | <g1> | *1* | *1* |

### Example 4

The records below show four HTTP requests to resource e1. 303 patterns are detected as follows: The RDF Dereferencing Interpret parses a 303 status code for the first request (line 1), hence it requires another request for the same resource e1 with status 200 within a short timeframe (the request must come from the same {IP address, user agent} couple - {65.23.43.12, "curl/7.21.3"}). The system associates two requests in a 303 pattern if their target resource names match according to the naming convention specified by the dataset administrator in a dedicated configuration file (in this example e1 and e1.rdf match because they share the same filename, stripped of the extension. In Linked Data publishing, it is best practice to identify a resource serialization by adding a file extension after the resource name, but other solutions might be adopted). This heuristic is required since the Accept: header is not stored in access logs. Hence, the system increases e1's request counter of a unit, because lines 1 and 2 belong to a single visit originated by {65.23.43.12, "curl/7.21.3"}, where RDF serialization of e1 was needed.

In lines 3,4 the client is a browser (Chrome), and requires an HTML version of e1. A second 303 pattern is detected. Overall, the RDF Dereferencing Interpret counts two requests for e1, thus properly interpreting 303 redirect.

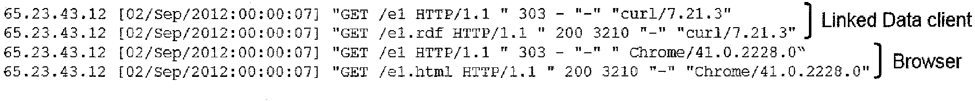

### Example 5

Two sample SPARQL queries are shown. Query A is considered to be a "light" query, whereas Query B is considered to be "heavy" (note the presence of UNION, OPTIONAL, and FILTER statements).

| | |
|---|---|
| SELECT x | SELECT ?uri ?comm ?preferredLabel |
| WHERE | WHERE {{ |
| {?x a foaf:Person.} | ?uri rdfs:comment ?comm . |
| | FILTER(LANG(?comm) = "" && regex(str(?comm), '(^\|\\\\W)fr', 'i')) |
| | } |
| | UNION { |
| | ?uri rdfs:label ?preferredLabel . |
| | OPTIONAL {?uri skos:prefLabel ?preferredLabel. } |
| | }}} |
| Query A | Query B |

## Claims

1. A system to provide visitor information about visitor requests to a dataset of linked RDF data, the system comprising:
a loading module (102) with a log ingestion unit (103) to read and parse access logs (101) of visitor requests from the dataset;
a linked data-specific metric extractor (105, 501) to extract metrics related specifically to linked data, the metrics providing visitor information related to individual RDF resources in the dataset; a request counter (502) in the linked data-specific metric extractor to count requests issued by visitors to each resource in the dataset, the request counter including requests using RDF dereferencing and requests using SPARQL referred to as SPARQL query count;
**characterised by**:
the SPARQL query count including separation of the RDF resources queried into URIs representing RDF instances, RDF classes, RDF properties and RDF graphs;
a database loader (312) to store the visitor information computed by the linked data-specific metric extractor in a database which is linked to a query unit to answer enquiries about the visitor information.

2. A system according to claim 1, wherein the linked data-specific metric extractor (105, 501) includes a SPARQL metric extractor (504) to extract metrics related to SPARQL query types and/or SPARQL query complexity, and preferably wherein the SPARQL metric extractor extracts counts for different SPARQL verbs and/or SPARQL query malformation and/or language tags.

3. A system according to claim 2, wherein the SPARQL metric extractor (504) extracts SPARQL query complexity based on SPARQL syntax analysis.

4. A system according to claim 3, wherein the queries are classified as light or heavy using a binary classifier trained on syntactic features of SPARQL queries, preferably wherein UNION statements, OPTIONAL statements, multiple joins, FILTER statements, and regular expressions in FILTERS indicate heavier complexity.

5. A system according to any of claims 2 to 4, wherein the linked data-specific metric extractor (105, 501) further includes an RDF dereferencing interpreter (503) to avoid double counting of access during an HTTP 303 redirect, and preferably wherein a request with an HTTP 303 redirect code together with a request with an HTTP 200 OK code for the same resource and visitor are counted as a single request if they originate within a certain time frame.

6. A system according to claim 5, wherein any request with an HTTP 303 redirect code is added to a pending 303 list that keeps track of how many 303 patterns have been initiated, and which is labelled with the resource and visitor couple and if a request with an HTTP 200 OK code and the same label is detected with a timestamp that does not significantly differ from the HTTP 303 request, a separate pending 303 counter for the couple is decreased by 1, indicating that such 303 pattern is now concluded, and the request counter is incremented by 1.

7. A system according to claim 6, wherein the resource is processed to apply the naming convention for the dataset, for example to strip the file extension, in order to match the resource names in the HTTP 303 request and the HTTP 200 OK code.

8. A system according to any of the preceding claims, further including a general metric extractor (506) to extract metrics related to web audience and/or a session detector (511) to detect the number of visitor sessions.

9. A system according to any of the preceding claims, wherein the request counter (502) provides separate counts of HTTP and SPARQL queries.

10. A system according to any of the preceding claims, wherein the request counter includes requests using SPARQL queries by counting the number of times a resource URI is included in SPARQL queries.

11. A system according to any of the preceding claims, wherein the loading module (102) includes a filter (104) which discards requests using a UA blacklist and/or an IP-based blacklist and/or a domain-based blacklist.

12. A system according to any of the preceding claims, wherein the linked data-specific metric extractor (105, 501) extracts one or more of the following metrics:
a request count of how many times a resource in the claim set has been accessed, including how many times the sources was dereferenced with HTTP and how many times the URI was found in SPARQL queries, including separation of the RDF resources queried into URIs representing RDF instances, RDF classes, RDF properties and RDF graphs;
a data access protocol count providing the separate counts of the HTTP lookups SPARQL queries;
a SPARQL query type metric indicating the number of light and heavy SPARQL queries set to the datasets;
an HTTP methods count providing count of requests issued using individual HTTP verbs, for example including GET, POST or HEAD;
a request errors count providing a count of HTTP and SPARQL error response codes.

13. A system for identifying abuses of a dataset of linked RDF data according to any of the preceding claims, wherein the SPARQL metric extractor (504) is also to identify misuse of the dataset, for example by identifying unusual peaks of complex SPARQL queries.

14. A decision support system for allowing improvements to datastore performance according to any of the preceding claims, wherein the system detects resources with more visitors than other resources and/or frequently executed SPARQL queries.

15. A computer-implemented method of providing visitor information about visitor requests to a dataset of linked RDF data, the method comprising:
reading and parsing (10) access logs of visitor requests from the linked dataset;
extracting (20) metrics related specifically to linked data, the metrics providing visitor information related to individual RDF resources in the dataset;
the metric extraction including counting requests issued by visitors to each resource in a dataset, including requests using RDF dereferencing and requests using SPARQL queries referred to as a SPARQL query count,
**characterised by**:
the SPARQL query count including separation of the RDF resources queried into URIs representing RDF instances, RDF classes, RDF properties and RDF graphs;
storing (30) the visitor information computed by the metric extraction module; and answering enquiries about the visitor information.

## Patentansprüche

1. System zum Bereitstellen von Besucherinformationen über Besucheranfragen an einen Datensatz verknüpfter RDF-Daten, das System umfassend:
ein Lademodul (102) mit einer Logaufnahmeeinheit (103) zum Laden und Parsen von Zugriffslogs (101) von Besucheranfragen von dem Datensatz;
einen verknüpften datenspezifischen Metrikextraktor (105, 501) zum Extrahieren von Metriken, die sich speziell auf verknüpfte Daten beziehen, wobei die Metriken Besucherinformationen bezüglich individueller RDF-Ressourcen in dem Datensatz bereitstellen; einen Anfragezähler (502) in dem verknüpften datenspezifischen Metrikextraktor zum Zählen der Anfragen, die durch Besucher an jede Ressource in dem Datensatz ausgegeben wurden, wobei der Anfragezähler Anfragen unter Verwendung von RDF-Dereferenzierung und Anfragen unter Verwendung von SPARQL umfasst, die als SPARQL-Abfragezählung bezeichnet werden, **dadurch gekennzeichnet, dass**:
die SPARQL-Abfragezählung eine Aufteilung der abgefragten RDF-Ressourcen in URIs umfasst, die RDF-Instanzen, RDF-Klassen, RDF-Eigenschaften und RDF-Grafiken darstellen;
einen Datenbanklader (312) zum Speichern der Besucherinformationen, die durch den verknüpften datenspezifischen Metrikextraktor berechnet wurden, in einer Datenbank, die mit einer Abfrageeinheit verknüpft ist, um Anfragen über die Besucherinformationen zu beantworten.

2. System nach Anspruch 1, wobei der verknüpfte datenspezifische Metrikextraktor (105, 501) einen SPARQL-Metrikextraktor (504) umfasst, um Metriken zu extrahieren, die sich auch SPARQL-Abfragetypen und/oder SPARQL-Abfragekomplexität beziehen, und wobei der SPARQL-Metrikextraktor vorzugsweise Zählungen für verschiedene SPARQL-Verben und/oder SPARQL-Abfragefehlbildungen und/oder Sprachtags extrahiert.

3. System nach Anspruch 2, wobei der SPARQL-Metrikextraktor (504) SPARQL-Abfragekomplexität basierend auf SPARQL-Syntaxanalyse extrahiert.

4. System nach Anspruch 3, wobei die Abfragen unter Verwendung eines binären Klassifizierers, der mit syntaktischen Merkmalen von SPARQL-Abfragen geschult wurde, als leicht oder schwer klassifiziert werden, wobei vorzugsweise UNION-Statements, OPTIONALE Statements, Multiple Joins, FILTER-Statements und reguläre Ausdrücke in FILTERN eine schwerere Komplexität anzeigen.

5. System nach einem der Ansprüche 2 bis 4, wobei der verknüpfte datenspezifische Metrikextraktor (105, 501) ferner einen RDF-Dereferenzierungsinterpreter (503) umfasst, um doppelte Zählung eines Zugriffs während eines HTTP-303-Redirects zu vermeiden, und wobei vorzugsweise eine Anfrage mit einem HTTP-303-Redirectcode zusammen mit einer Anfrage mit einem HTTP-200-OK-Code für dieselbe Ressource und denselben Besucher als eine einzige Anfrage gezählt werden, wenn sie innerhalb eines bestimmten Zeitrahmens entstehen.

6. System nach Anspruch 5, wobei eine Anfrage mit einem HTTP-303-Redirectcode zu einer ausstehenden 303-Liste hinzugefügt wird, die verfolgt, wie viele 303-Muster eingeleitet wurden, und die mit dem Ressourcen-und-Besucherpaar beschriftet ist, und wobei, wenn eine Anfrage mit einem HTTP-200-OK-Code und demselben Label mit einem Zeitstempel erkannt wird, der sich nicht wesentlich von der HTTP-303-Anfrage unterscheidet, ein separater ausstehender 303-Zähler für das Paar um 1 verringert wird, was anzeigt, dass ein solches 303-Muster nun abgeschlossen ist, und der Anfragezähler um 1 erhöht wird.

7. System nach Anspruch 6, wobei die Ressource verarbeitet wird, um die Namenskonvention für den Datensatz anzuwenden, beispielsweise um die Dateinamenerweiterung zu entfernen, um die Ressourcennamen in der HTTP-303-Anfrage und den HTTP-200-OK-Code abzugleichen.

8. System nach einem der vorhergehenden Ansprüche, ferner umfassend einen allgemeinen Metrikextraktor (506) zum Extrahieren von Metriken, die sich auf ein Webpublikum beziehen, und/oder einen Sessionerkenner (511) zur Erkennung der Anzahl der Besuchersessions.

9. System nach einem der vorhergehenden Ansprüche, wobei der Anfragezähler (502) separate Zählungen von HTTP- und SPARQL-Anfragen bereitstellt.

10. System nach einem der vorhergehenden Ansprüche, wobei der Anfragezähler Anfragen unter Verwendung von SPARQL-Abfragen umfasst, indem gezählt wird, wie oft eine Ressourcen-URI in SPARQL-Abfragen enthalten ist.

11. System nach einem der vorhergehenden Ansprüche, wobei das Lademodul (102) einen Filter (104) umfasst, der Anfragen unter Verwendung einer UA-Blacklist und/oder einer IP-basierten Blacklist und/oder einer domainbasierten Blacklist verwirft.

12. System nach einem der vorhergehenden Ansprüche, wobei der verknüpfte datenspezifische Metrikextraktor (105, 501) eine oder mehr der folgenden Metriken extrahiert:
eine Anfragezählung, wie oft auf eine Ressource in dem Anspruchssatz zugegriffen wurde, die umfasst, wie oft die Quellen mit HTTP dereferenziert wurde und wie oft die URI in SPARQL-Abfragen gefunden wurde, und die die Aufteilung der abgefragten RDF-Ressourcen in URIs umfasst, die RDF-Instanzen, RDF-Klassen, RDF-Eigenschaften und RDF-Grafiken darstellen;
eine Datenzugriffsprotokollzählung, die die separaten Zählungen der HTTP-Lookups-SPARQL-Abfragen bereitstellen;
eine SPARQL-Abfragetypmetrik, die die Anzahl von leichten und schweren SPARQL-Abfragen anzeigt, die für die Datensätze gesetzt wurden;
eine HTTP-Methodenzählung, die eine Zählung der Anfragen bereitstellt, die unter Verwendung einzelner HTTP-Verben ausgegeben wurden, beispielsweise einschließlich GET, POST oder HEAD;
eine Anfragefehlerzählung, die eine Zählung von HTTP- und SPARQL-Fehlerreaktionscodes bereitstellt.

13. System zur Identifizierung von Missbrauchen eines Datensatzes verknüpfter RDF-Daten nach einem der vorhergehenden Ansprüche, wobei der SPARQL-Metrikextraktor (504) auch Missbrauch des Datensatzes beispielsweise durch Identifizierung ungewöhnlicher Spitzen komplexer SPARQL-Abfragen identifizieren soll.

14. Entscheidungsunterstützungssystem, um Verbesserungen der Datenspeicherleitung nach einem der vorhergehenden Ansprüche zu erlauben, wobei das System Ressourcen mit mehr Besuchern als andere Ressourcen und/oder häufig ausgeführte SPARQL-Abfragen erkennt.

15. Computerumgesetztes Verfahren zum Bereitstellen von Besucherinformationen über Besucheranfragen an einen Datensatz verknüpfter RDF-Daten, das Verfahren umfassend:
Lesen und Parsen (10) von Zugriffslogs von Besucheranfragen von dem verknüpften Datensatz;
Extrahieren (20) von Metriken, die sich speziell auf verknüpfte Daten beziehen, wobei die Metriken Besucherinformationen bezüglich der einzelnen RDF-Ressourcen in dem Datensatz bereitstellen;
wobei die Metrikextraktion Zählanfragen umfasst, die durch Besucher an jede Ressource in einem Datensatz ausgegeben wurden, einschließlich Anfragen unter Verwendung von RDF-Dereferenzierung und Anfragen unter Verwendung von SPARQL-Abfragen, die als SPARQL-Abfragezählung bezeichnet werden, **dadurch kennzeichnet, dass**:
die SPARQL-Abfragezählung eine Aufteilung der abgefragten RDF-Ressourcen in URIs umfasst, die RDF-Instanzen, RDF-Klassen, RDF-Eigenschaften und RDF-Grafiken darstellen;
Speichern (30) der Besucherinformationen, die durch das Metrikextraktionsmodul berechnet wurden; und Beantworten von Abfragen zu den Besucherinformationen.

## Revendications

1. Système destiné à fournir des informations de visiteurs concernant des demandes de visiteurs à un ensemble de données de données d'infrastructure RDF liées, le système comprenant :
un module de chargement (102) avec une unité d'ingestion de journal (103) pour lire et analyser des journaux d'accès (101) de demandes de visiteurs à partir de l'ensemble de données ;
un extracteur de métriques spécifiques aux données liées (105, 501) destiné à extraire des métriques spécifiquement connexes à des données liées, les métriques fournissant des informations de visiteurs connexes à des ressources d'infrastructure RDF individuelles dans l'ensemble de données ;
un compteur de demandes (502) dans l'extracteur de métriques spécifiques aux données liées pour compter des demandes émises par des visiteurs vers chaque ressource dans l'ensemble de données, le compteur de demandes incluant des demandes utilisant un déréférencement d'infrastructure RDF et des demandes utilisant le protocole et langage de requête SPARQL, appelées « comptage de requêtes de protocole SPARQL » ; **caractérisé en ce que** :
le comptage de requêtes de protocole SPARQL inclut une séparation des ressources d'infrastructure RDF interrogées en des adresses URI représentant des instances d'infrastructure RDF, des classes d'infrastructure RDF, des propriétés d'infrastructure RDF et des graphes d'infrastructure RDF ;
un chargeur de base de données (312) destiné à stocker les informations de visiteurs calculées par l'extracteur de métriques spécifiques aux données liées, dans une base de données qui est liée à une unité de requête pour répondre à des interrogations concernant les informations de visiteurs.

2. Système selon la revendication 1, dans lequel l'extracteur de métriques spécifiques aux données liées (105, 501) inclut un extracteur de métriques de protocole SPARQL (504) destiné à extraire des métriques connexes à des types de requêtes de protocole SPARQL et/ou à une complexité de requêtes de protocole SPARQL, et de préférence dans lequel l'extracteur de métriques de protocole SPARQL compte pour différents verbes SPARQL et/ou étiquettes de langage et/ou une malformation de requêtes de protocole SPARQL.

3. Système selon la revendication 2, dans lequel l'extracteur de métriques de protocole SPARQL (504) extrait la complexité de requêtes de protocole SPARQL sur la base d'une analyse syntaxique de protocole SPARQL.

4. Système selon la revendication 3, dans lequel les requêtes sont classées comme « légères » ou « lourdes » en utilisant un classificateur binaire entraîné sur des caractéristiques syntaxiques de requêtes de protocole SPARQL, de préférence dans lequel des instructions d'union « UNION », des instructions d'options « OPTIONAL », des rattachements multiples, des instructions de filtre « FILTER » et des expressions régulières dans des instructions de filtre « FILTERS » indiquent une complexité plus lourde.

5. Système selon l'une quelconque des revendications 2 à 4, dans lequel l'extracteur de métriques spécifiques aux données liées (105, 501) inclut en outre un interpréteur de déréférencement d'infrastructure RDF (503) en vue d'éviter un double comptage d'accès pendant une redirection « HTTP 303 », et de préférence dans lequel une demande avec un code de redirection « HTTP 303 », conjointement avec une demande avec un code « HTTP 200 OK » pour la même ressource et le même visiteur, sont comptées comme une unique demande, si elles sont envoyées au cours d'une trame temporelle donnée.

6. Système selon la revendication 5, dans lequel une quelconque demande avec un code de redirection « HTTP 303 » est ajoutée à une liste 303 en attente qui garde la trace du nombre de motifs « 303 » qui ont été initiés, et qui est étiquetée avec le couple ressource/visiteur, et si une demande avec un code « HTTP 200 OK » et la même étiquette est détectée avec une estampille temporelle qui ne diffère pas sensiblement de la requête « HTTP 303 », un compteur « 303 » en attente individuel pour le couple est réduit de 1, indiquant que ledit motif « 303 » est à présent conclu, et le compteur de demandes est incrémenté de 1.

7. Système selon la revendication 6, dans lequel la ressource est traitée en vue d'appliquer la convention de nommage pour l'ensemble de données, par exemple pour supprimer l'extension de fichier, afin de faire correspondre des noms de ressources dans la demande « HTTP 303 » et le code « HTTP 200 OK ».

8. Système selon l'une quelconque des revendications précédentes, incluant en outre un extracteur de métriques général (506) destiné à extraire des métriques connexes à l'audience web et/ou un détecteur de session (511) destiné à détecter le nombre de sessions de visiteurs.

9. Système selon l'une quelconque des revendications précédentes, dans lequel le compteur de demandes (502) fournit des comptages individuels de requêtes de protocole HTTP et de protocole SPARQL.

10. Système selon l'une quelconque des revendications précédentes, dans lequel le compteur de demandes inclut des demandes utilisant des requêtes de protocole SPARQL en comptant le nombre de fois où une adresse URI de ressources est incluse dans des requêtes de protocole SPARQL.

11. Système selon l'une quelconque des revendications précédentes, dans lequel le module de chargement (102) inclut un filtre (104) qui rejette des demandes en utilisant une liste noire UA et/ou une liste noire basée sur IP et/ou une liste noire basée sur le domaine.

12. Système selon l'une quelconque des revendications précédentes, dans lequel l'extracteur de métriques spécifiques aux données liées (105, 501) extrait une ou plusieurs des métriques suivantes :
un comptage de demandes indiquant le nombre de fois où une ressource dans l'ensemble revendiqué a été accédée, y compris le nombre de fois où les sources ont été déréférencées avec le protocole HTTP et le nombre de fois où l'adresse URI a été trouvée dans les requêtes de protocole SPARQL, incluant la séparation des ressources d'infrastructure RDF interrogées en des adresses URI représentant des instances d'infrastructure RDF, des classes d'infrastructure RDF, des propriétés d'infrastructure RDF et des graphes d'infrastructure RDF ;
un comptage de protocole d'accès aux données fournissant les comptages individuels des requêtes de protocole SPARQL de recherches HTTP ;
une métrique de type de requêtes de protocole SPARQL indiquant le nombre de requêtes de protocole SPARQL légères et lourdes définies aux ensembles de données ;
un comptage de procédés HTTP fournissant un comptage de demandes émises en utilisant des verbes HTTP individuels, par exemple incluant « GET », « POST » ou « HEAD » ;
un comptage d'erreurs de demandes fournissant un comptage de codes de réponse d'erreur HTTP et SPARQL.

13. Système destiné à identifier des abus d'un ensemble de données de données d'infrastructure RDF liées selon l'une quelconque des revendications précédentes, dans lequel l'extracteur de métriques de protocole SPARQL (504) doit également identifier une mauvaise utilisation de l'ensemble de données, par exemple en identifiant des pics inhabituels de requêtes de protocole SPARQL complexes.

14. Système d'aide à la décision pour permettre des améliorations de performances de magasin de données selon l'une quelconque des revendications précédentes, dans lequel le système détecte des ressources contenant plus de visiteurs que d'autres ressources et/ou des requêtes de protocole SPARQL fréquemment exécutées.

15. Procédé, mis en oeuvre par ordinateur, de fourniture d'informations de visiteurs concernant des demandes de visiteurs à un ensemble de données de données d'infrastructure RDF liées, le procédé comprenant les étapes ci-dessous consistant à :
lire et analyser (10) des journaux d'accès de demandes de visiteurs à partir de l'ensemble de données lié ;
extraire (20) des métriques spécifiquement connexes à des données liées, les métriques fournissant des informations de visiteurs connexes à des ressources d'infrastructure RDF individuelles dans l'ensemble de données ;
l'extraction de métriques incluant le comptage des demandes émises par des visiteurs à chaque ressource dans un ensemble de données, y compris des demandes utilisant un déréférencement d'infrastructure RDF et des demandes utilisant des requêtes de protocole SPARQL, appelées « comptage de requêtes de protocole SPARQL, **caractérisé en ce que** :
le comptage de requêtes de protocole SPARQL inclut une séparation des ressources d'infrastructure RDF interrogées en des adresses URI représentant des instances d'infrastructure RDF, des classes d'infrastructure RDF, des propriétés d'infrastructure RDF et des graphes d'infrastructure RDF ;
stocker (30) les informations de visiteurs calculées par le module d'extraction de métriques ; et
répondre à des interrogations concernant les informations de visiteurs.
